# EUROPEAN PATENT SPECIFICATION

(11) **EP 1 623 003 B1**
(45) Date of publication and mention of the grant of the patent: **05.07.2006**
(21) Application number: 04731937.1
(22) Date of filing: 10.05.2004
(51) Int. Cl.: C12G 1/028

(54) **WINE-MAKING PROCESS WITH MACERATION BY MICROWAVE IRRADIATION**
VERFAHREN ZUR WEINHERSTELLUNG MIT MAZERATION DURCH MIKROWELLEN
PROCEDE DE VINIFICATION A MACERATION PAR IRRADIATION PAR MICRO-ONDES

(30) Priority: 13.05.2003 IT RE20030048
(43) Date of publication of application: 08.02.2006
(73) Proprietor: DIEMME S.P.A., 48022 Lugo (IT)
(72) Inventor: MELANDRI, Primo, I-48012 Bagnacavallo (IT); BETTOLI, Danilo, I-48018 Faenza (IT)
(74) Representative: Corradini, Corrado
(86) International application number: PCT/EP2004/005004
(87) International publication number: WO 2004/101728

(56) References cited:
- EP-A- 0 217 683
- EP-A- 1 026 233
- FR-A- 2 025 207
- FR-A- 2 597 882
- FR-A- 2 826 665

## Description

### TECHNICAL FIELD

The present invention relates to the wine-making sector, and particularly but not exclusively to the sector making wine from red grapes.

### PRIOR ART

Before the grape is pressed it is generally stripped from the stalks, the product of pressing the stalk-stripped grape, known as the pressed product, thus comprising the marc (skins and seeds) and a liquid part known as the must. In red vinification, the solid parts of the grape (skins and seeds) are left under maceration together with the must during fermentation inside a vat, also known a wine fermenter.

In contrast, in white vinification, fermentation takes place substantially in the absence of the skins.

During their retention in the vat the solid parts of the grape, such as the skins, group together at the top to form a cap which floats on the must; the longer the skins remain in contact with the must, the greater the colour intensity of the wine and its richness in extracted substances. To facilitate extraction of aromas and pigments from the grape epicarp, the cap is mixed into the must once or twice during alcoholic fermentation.

During skin retention in the must, maximum extraction of colour and polyphenols must be achieved without mechanically maltreating the skins, in order to prevent undesirable substances being transferred.

The extraction time cannot be prolonged beyond certain limits due to logistical reasons.

A reduced extraction time is generally obtained by increasing the extraction using various known techniques, which however present certain drawbacks.

One of the techniques used to improve colour and polyphenol extraction is known as thermovinification. Thermovinification consists of heating the entire mass (must and solid parts), which favours extraction but partly compromises the wine characteristics to reduce its final quality, particularly from the organoleptic viewpoint; it also compromises stabilization of the coloured complexes.

It has been found that heating the entire mass is damaging, in particular if the skins are heated together with the must.

When alcoholic fermentation favoured by thermovinification has ended, the solid parts are removed from the must or drained off, and fed to subsequent processes.

The vinification proceeds with meticulous checks, decanting, filling, clarifying, filtration etc., with bottling taking place at the end of these processes.

### DISCLOSURE OF THE INVENTION

The main object of the present invention is to facilitate extraction of anthocyans (colour) and polyphenolic substances from the skins, while preventing the problems of excessive heating typical of thermovinification, and in a more general sense while strongly increasing the quantity and quality of substances transferred to the wine during the operation.

This object is attained according to the invention by the process and plant defined in the claims.

Essentially, according to the invention at least a portion of the constituent skins of the cap is subjected to microwave irradiation.

The irradiation generally takes place on the cap of skins which forms in the wine fermenter, independently of its position.

In particular, irradiation can take place during normal vinification with the cap above the liquid, or after the liquid has been drained off, i.e, removed from the wine fermenter, with the skins which form the cap resting on the base of the wine fermenter.

According to the invention, it is not essential that the irradiation takes place within the wine fermenter, it being for example possible to mechanically separate the skins from the liquid, irradiate them and then return them to the liquid, at any moment during vinification.

In an improved method of implementing the process of the invention, on leaving the pressing/stalk-stripping machine the product is immediately subjected to draining with separation of about 30-60% of the must.

That part of the product containing the marc is subjected to the action of microwaves which cause a temperature increase of 10-50°C, while the must is treated in a heat exchanger and heated by 30-70°C in the absence of marc.

After said separate treatments, the two parts are again combined and mixed in a wine fermenter, where the skins macerate in the hot must. After a maceration and pause time between 0 and 30 minutes, the invention proceeds in two alternative modes.

According to a first mode the skins are separated from the product contained in the wine fermenter, and the must is fermented in the absence of skins (white fermentation).

According to another mode of implementation, the product is fermented while also containing the skins (red fermentation).

By virtue of the invention an increase is obtained in the rate of extraction of numerous substances such as pigments, tannins and aromas from the grape epicarp as a result of lysis of the cell walls by effect of the pressure due to the action of the microwaves on the intercellular liquids.

In contrast to thermovinification, microwave treatment is localized on just the marc and preferably on a portion thereof, hence does not cause increase in the temperature of the mass under fermentation with the skins present, but only of the irradiated portion (part of the cap formed by the solid parts) with the result that any heating of the liquid mass in the absence of skins does not compromise the stability of the extracted aromas, tannins and pigments, hence maintaining them more stable with time.

By virtue of the microwave irradiation, the active principles are extracted from the skins in a reduced time, with an increase both of polyphenols and of anthocyan substances, which prove to be more stable with time. According to the invention a normal wine fermenter comprising a vessel is used.

Irradiation takes place through one or more windows positioned along the wall, generally the vertical wall, of the vessel at a height such as to involve only the cap of marc and not the underlying must.

The invention comprises the use of microwave generators with maximum power adjustable from 0% to 100% via a control panel. The microwaves have a maximum power of 2000 watt and a frequency between 900 Hz and 3000 Hz. Irradiation takes place in several cycles preceded by mixing the marc and followed at least by the time required to re-form the cap. The vinification process according to the invention hence comprises the following operative steps.

According to a first mode of implementation the grape is subjected to stalk-stripping and mechanical pressing, the resultant pressed product being fed into a wine fermenter. The usual fermentation activation products and selected yeasts are added to the pressed product. Fermentation then commences, with the solid parts separating to form the cap.

After grouping at the level of the irradiation window, these solid parts are subjected to an initial microwave treatment with one or two 2-3 minute cycles, each at a power of 800-1200 watt, this generally being sufficient.

If more than one cycle is carried out, the marc is preferably not mixed in during the first treatment. After each microwave irradiation the cap is slowly mixed into the must.

In the days following the initial treatment further 2 or 3 minute irradiation cycles with an irradiation power variable from 800 to 1000 watt are carried out. The frequency of the subsequent irradiations is a maximum of three per day, each irradiation cycle being followed by mixing.

When alcoholic fermentation and maceration are complete, the fermented must, separated from the cap, is recovered into containers and subjected to the usual decanting to eliminate dregs and subjected to inoculation with selected bacteria to initiate malolactic fermentation.

Final decanting takes place, possibly followed by SO₂ treatment.

As stated, the skins can also be irradiated after extracting the liquid, in which case the skins are then subjected to pressing which separates a very coloured liquid to be used in the subsequent wine production stages. According to a further mode of implementation the skins are immediately separated from the must, and undergo the microwave irradiation process while the must is heated separately.

The irradiated skins are then returned to the hot must and maceration is completed, to proceed to white or red fermentation as aforestated.

### BRIEF DESCRIPTION OF THE DRAWINGS

The characteristics and merits of the invention will be apparent from the ensuing detailed description given with reference to the figures of the accompanying drawings, which illustrate by way of non-limiting example a particular preferred embodiment the first mode of implementation of the process, and the flow diagram relative to the further mode of implementation of the process.

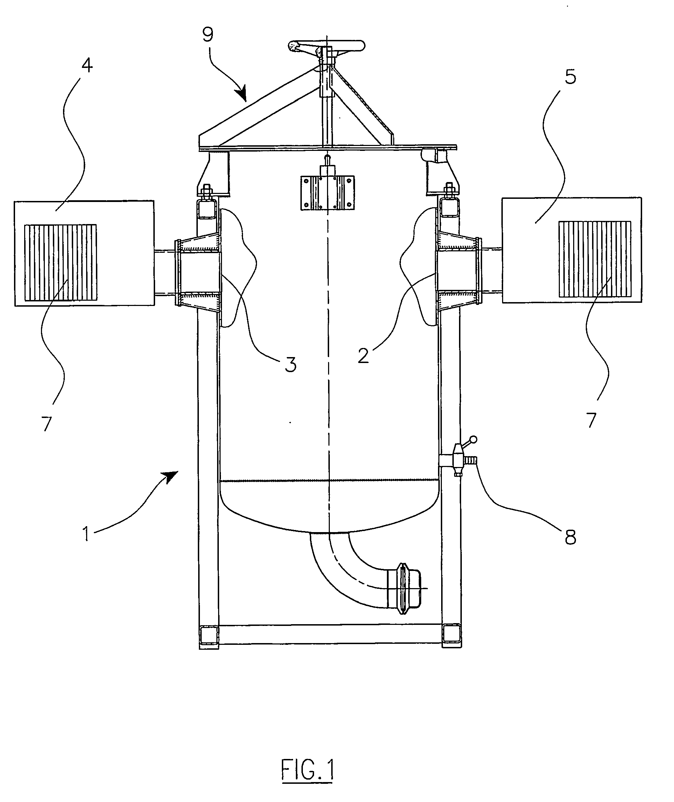

Figure 1 is a front view of a wine fermenter according to the invention.

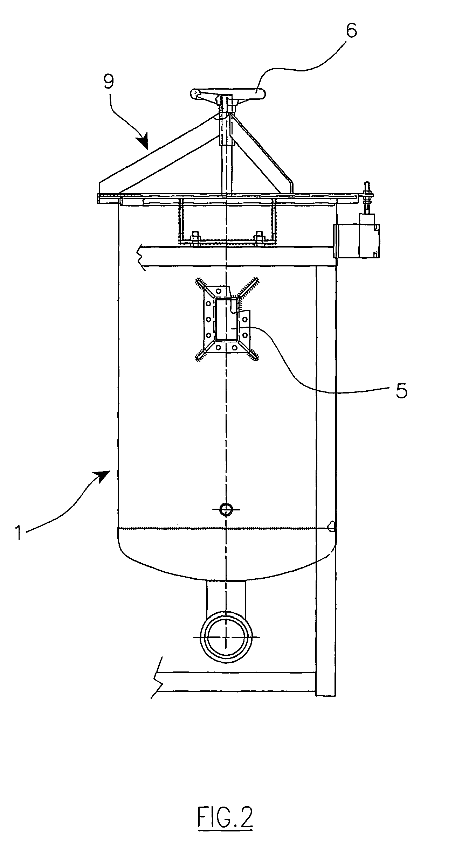

Figure 2 is a side view of the wine fermenter of Figure 1.

Figure 3 is an axial side section through the wine fermenter of Figure 1.

Figure 4 shows a different embodiment of the wine fermenter.

Figure 5 shows the flow diagram of a second mode of implementation of the process.

### BEST MODE FOR CARRYING OUT THE INVENTION

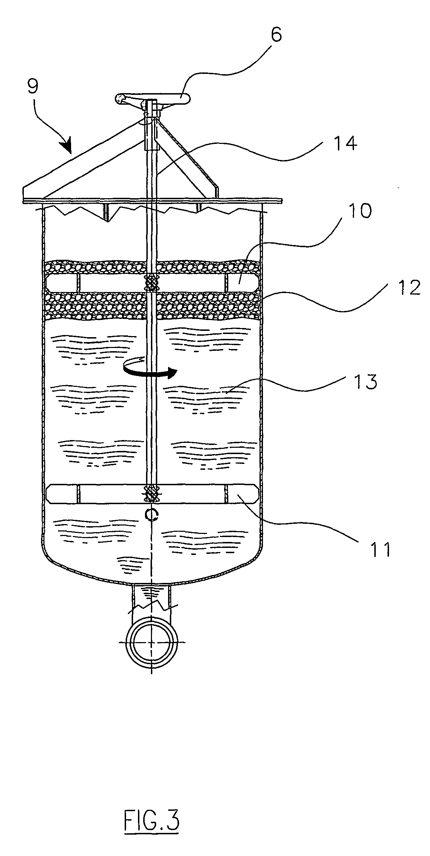

Figures from 1 to 3 show the wine fermenter 1 composed of a vessel of about 100 litres capacity, arranged for microwave treatment. The vessel comprises two windows 2 and 3, through which irradiation takes place and which are positioned along the vessel wall at a height such as to involve only the marc cap 12 and not the underlying must 13 (Figure 3).

The microwave generators 4 and 5 are positioned in front of the windows 2 and 3 respectively, and are sized to irradiate a maximum power referred to a frequency of about 2500 mHz which is adjustable from 0% to 100% by a control panel 7.

A mixer 9 comprises a shaft 14, on which there are keyed at least one impeller 10 within the cap 12, and possibly another impeller 11 within the must 13.

The shaft 14 is operated manually by a mixing device 6, such as not to cause heating due to friction of the impellers 10 and 11 within the must 13.

In the now described mode of implementation, 82 kg of pressed and stalk-stripped "Cabernet Sauvignon" were used, the must 13 of which was fed into the wine fermenter 1.

0.1 g/kg of metabisulphite, 0.3 g/kg of Actibiol (fermentation activator) and 0.4 g/kg of selected yeast, prepared by the usual procedure, were added to the must 13.

Fermentation started, with formation of the cap from the marc which grouped against the windows 2 and 3, enabling two irradiation cycles of 3 minutes to be carried out at a power of 1200 W.

The cap 2 was then slowly mixed using the mixer 9, after which when the marc had again formed a group, a new microwave application of 3 minutes at a power of 1200 W was effected. The operation was repeated once, the two successive microwave applications being effected for 2 minutes each at a power of 800 W.

Subsequently, during the more vigorous fermentation stages, when the cap 12 re-formed more quickly, up to two cycles per day of 2 minutes at a power of 800 W were applied, repeated for ten days.

Samples of the must 13 were taken at regular intervals during alcoholic fermentation, for quantitative analyses.

The parameters measured were the temperature, measured on a quantity of must under fermentation withdrawn by the appropriate sampling valve 8 in proximity to the base of the wine fermenter 1; the degree of sugar (expressed in degrees Baume'), measured with a suitable immersion densimeter calibrated for a quantity of 2 litres, withdrawn by the sampling valve 8; colour intensity, measured as the sum of the absorbance at 420 nm and 520 nm of a product sample diluted 1 to 10; tonality, measured as the ratio of absorbance at 420 nm to that at 520 nm of a product sample diluted 1 to 10; and finally the phenolic extraction index, determined as the optical density of the product, diluted 1 to 100 at a wavelength of 280 nm. The results of the analyses conducted on the must samples 13 are shown in Table 1.

At the end of alcoholic fermentation, i.e. two days after the last microwave treatment, draw-off took place, i.e. the fermented must 13 was collected in demijohns.

A quantity of pressed marc, equal to a volume of 10-15%, was added, obtained by pressing the fermented marc with a manual press.

After one week the wine was decanted from the demijohns, and inoculated with selected bacteria to initiate malolactic fermentation.

On termination, the wine was decanted and treated with potassium bisulphite (30 mg/I).

The working cycle is summarized in the following Table 1, which also shows the results of the various checks, and the relative parameters, followed during processing.

**TABLE 1**

| Date | Time | Temp.°C | Sugar deg. Baume' | Intens. | Tonality | Phenolic extr. ind. | Notes |
|---|---|---|---|---|---|---|---|
| 30/0 9 | 19:30 | | | | | | Fermentation commenced |
| 2/10 | 10:00 | | | | | | Cap formed |
| 2/10 | 14:30 | | | | | | |
| 2/10 | 18:30 | | | | | | 3 min irradiat. 1200 W |
| 3/10 | 9:30 | | | | | | 3 min irradiat. 800 W |
| 3/10 | 14:00 | | | | | | 2 min irradiat. 800 W |
| 3/10 | 17:00 | | | | | | 2 min irradiat. 800 W |
| 4/10 | 9:30 | | | | | | 2 min irradiat. 800 W |
| 4/10 | 17:00 | | | | | | 2 min irradiat. 800 W |
| 4/10 | 18:30 | 23 | 11.00 | | | | |
| 5/10 | 8:30 | 24 | 11.00 | | | | |
| 5/10 | 19 | 27 | 10.20 | | | | |
| 6/10 | 9:30 | 27 | 7.75 | 3.49 | 5.1 | 18.6 | |
| 7/10 | 9:00 | 23 | 4.50 | 3.63 | 7.5 | 25.1 | 2 min irradiat. 800 W |
| 7/10 | 16:30 | | | | | | 2 min irradiat. 800 W |
| 9/10 | 9:00 | 24 | 0.50 | 5.35 | 5.5 | 29.9 | |
| 9/10 | 10:30 | | | | | | 2 min irradiat. 800 W |
| 9/10 | 16.45 | | | | | | 2 min irradiat. 800 W |
| 9/10 | 18:00 | 28 | 0.00 | 4.8 | 7.8 | 4 | |
| | | | | | | 47.1 | |
| 10/1 0 | 8:00 | 27 | 0.00 | 8.78 | 3.9 | 47.2 | |

On termination of the malolactic fermentation stage, comparative analyses were effected on a sample of wine produced from the same grape by the traditional method, and a sample of wine obtained by vinification with irradiation, to verify the evolution of the parameters of interest (colour intensity, colour tonality and phenolic extraction index: the colour quality of a red wine is greater the higher the intensity and the lower the tonality) accompanied by a final tasting test to determine the organoleptic properties of the wine during maturing.

The data collected in Table 2 indicate that, with the marc maceration process for extracting anthocyans, tannins and aromas, aided by microwaves, a substantial increase in the colour quality (intensity/tonality ratio) from 1.87 to 2.46 was obtained together with an increase in the phenolic extraction index of about 10%. The excellent analytical results are supplemented by the likewise excellent organoleptic results, which decidedly favour the sample of wine obtained by alcoholic fermentation with microwave irradiation.

**Table 2**

| **Traditional process** | | | Process with microwave irradiation | | |
|---|---|---|---|---|---|
| Intensity | Tonality | Phenolic extr. index | Intensity | Tonality | Phenolic extr. index |
| 9.2 ***(10.99*)*** | 4.9 ***(3.8*)*** | 42.6 ***(52.0*)*** | 10.1 ***(11.1*)*** | 4.1 ***(3.4*)*** | 47.2 ***(52.3*)*** |
| The colour is purple ruby red, with bouquet similar to mature dark red fruit; good structure and persistence in the mouth. | | | The colour is purple ruby red, very thick and intense; very intense mature dark red fruit bouquet; excellent structure and tannin softness in the mouth. | | |
| Score: 79/100 | | | I Score: 86/100 | | |

| | | | | | |
|---|---|---|---|---|---|
| ****The results determined at the end of alcoholic fermentation are reproduced in italics for comparison.*** | | | | | |

To verify the effect of microwave treatment on the aroma and pigment stability, a determination was made of the percentage of these components extracted during alcoholic fermentation which, on termination of malolactic fermentation, had not undergone degradation.

The data, obtained as the ratio of values measured on termination of malolactic fermentation to those measured on termination of alcoholic fermentation, are reproduced in Table 3.

**Table 3**

| Intensity | | Tonality | | **Phenolic index** | |
|---|---|---|---|---|---|
| **A.** | **B.** | **A.** | **B.** | **A.** | **B.** |
| 0.837 | 0.910 | 1.290 | 1.206 | 0.819 | 0.903 |

| | | | | | |
|---|---|---|---|---|---|
| **A**. Traditional sample | | | | | |
| **B**. Sample irradiated with microwaves | | | | | |

The wine obtained by microwave irradiation has a greater colour intensity and a lower tonality, with a decidedly higher phenolic index.

To correctly interpret the result obtained, it should be noted that the data are relative and not absolute, hence independent of the quantity of extracted product.

From the experimental results, it can be seen that of 100% of phenols extracted from the microwave irradiated sample, 10% degrade, whereas in the product treated with the traditional method 19% degrade.

It is hence apparent that, in addition to improving colour and aroma extraction, extraction by microwave irradiation stabilizes their molecular structure with time.

Said irradiation can be carried out within any known type of wine fermenter, and in any position thereof, provided irradiation of the liquid is avoided.

The positive results obtained, as highlighted above, do not change.

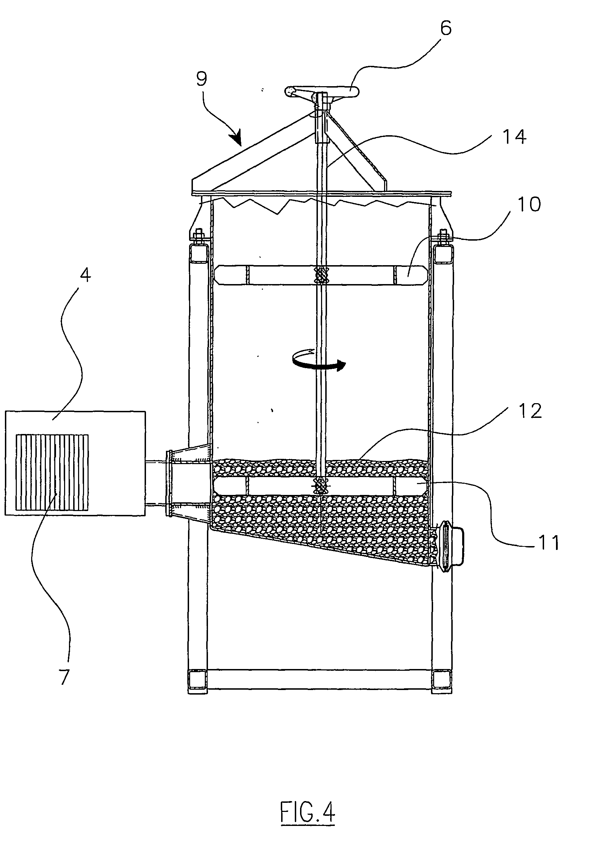

With particular reference to Figure 4, this shows a flat bottomed fermenter after extracting the liquid, in which the cap of skins rests on the bottom.

The irradiation windows are evidently positioned in proximity to the bottom.

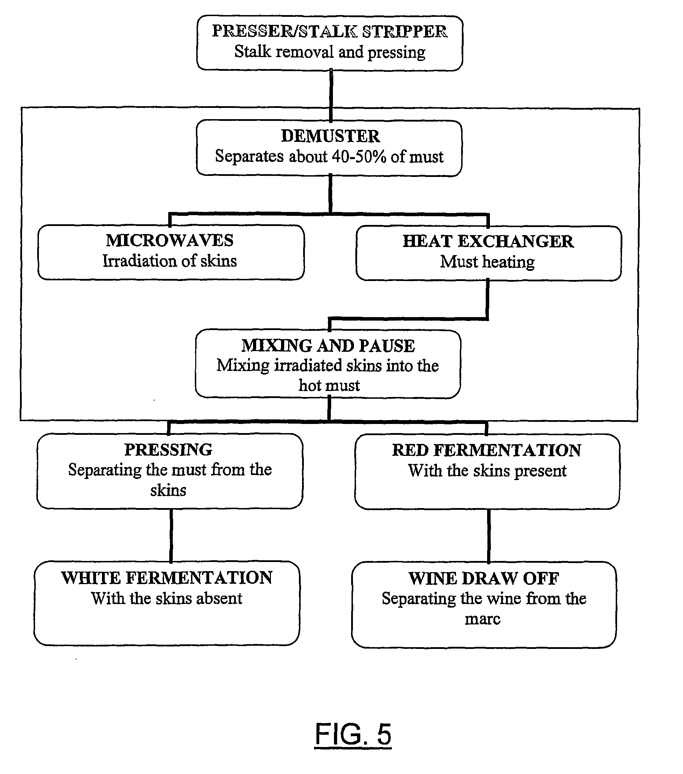

Figure 5 shows the flow diagram of a second mode of implementation of the invention.

After stalk-stripping in the usual wine press/stalk-stripper the product (must and skins) is fed to the demuster where about 30-60% of the must is separated.

The part containing the skins is subjected in the container 102 to microwaves having the characteristics already defined for the first mode of implementation of the process, and using similar modalities.

In this step the product, substantially consisting of skins, reaches a temperature of about 40-60°C.

Simultaneously the must free of skins is heated, in a separate environment 103, to a temperature of 60-80°C.

On termination of said operations the two parts are combined and mixed to macerate together in the container 104, and after a time between 0 and 30 minutes are fed to white fermentation, after separating the skins, or to red fermentation in the presence of the skins.

The process is then completed as indicated for the first mode of implementation.

## Claims

1. A process comprising pressing the solid parts of the grape, and introducing the pressed product into a wine fermenter to form a cap which floats on the must, **characterised in that** at least a portion of the cap is irradiated with microwaves.

2. A process as claimed in claim 1, **characterised in that** the microwave irradiation is carried out on the skins in an environment separate from the must.

3. A process as claimed in claim 2, **characterised in that** the skins attain a temperature between 40°C and 60°C during irradiation.

4. A process as claimed in claim 2, **characterised in that** the must is heated, in the absence of skins, to a temperature between 60°C and 80°C.

5. A process as claimed in claims 3 and 4, **characterised in that** the must and the skins are mixed together and left to macerate for a time between 0 and 30 minutes.

6. A process as claimed in claim 5, **characterised by** proceeding to alcoholic fermentation after maceration.

7. A process as claimed in claim 6, **characterised in that** the alcoholic fermentation takes place in the absence of skins.

8. A process as claimed in claim 1, **characterised in that** the microwaves vary in frequency between 900 and 3000 MHz.

9. A process as claimed in claim 1, **characterised in that** the microwaves have a power between 800 watt and 1200 watt.

10. A process as claimed in claim 1, **characterised in that** the microwave power is adjustable, at each irradiation cycle, up to 100% of the maximum power, by a suitable control panel.

11. A process as claimed in claim 1, **characterised in that** the duration of each irradiation cycle is between 2 and 3 minutes.

12. A process as claimed in claim 1, **characterised in that** the cap is mixed into the must before each irradiation cycle.

13. A process as claimed in claim 1, **characterised in that** a time sufficient for the cap floating on the must to form is left between one irradiation cycle and the next.

14. A process as claimed in claim 1, **characterised in that**, after the first irradiation cycle, at least one irradiation cycle is effected daily.

15. A process as claimed in claim 14, **characterised in that**, after the first irradiation cycle, not more than three irradiation cycles are effected daily.

16. A process as claimed in claim 1, **characterised in that** irradiation of the skins takes place in any position of the wine fermenter.

17. A process as claimed in claim 1, **characterised by** irradiating the skins when separated from the liquid.

18. A wine-making plant comprising a wine fermenter provided with means for mixing the pressed product, means for extracting the liquid and means for extracting the skins, **characterised by** comprising microwave irradiation means.

19. A plant as claimed in claim 18, **characterised in that** the microwave irradiation means comprise at least one microwave generator and, provided in the wine fermenter wall, at least one window transparent to microwave passage.

20. A plant as claimed in claim 18, **characterised in that** at least one window through which irradiation takes place is positioned along the wine fermenter wall at a height such as to involve only the skins.

21. A plant as claimed in claim 18, **characterised by** comprising several microwave generators and several irradiation windows.

22. A plant as claimed in claim 18, **characterised in that** the microwave generator has a maximum power of 2 kW.

23. A plant as claimed in claim 18, **characterised by** comprising a control circuit for regulating the microwave power between 0% and 100% of its maximum value.

24. A plant as claimed in claim 18, **characterised in that** the irradiation window presents a surface having a size between 20 and 60 cm².

25. A plant as claimed in claim 18, **characterised in that** the microwave generator irradiates at a frequency between 900 and 3000 MHz.

## Patentansprüche

1. Verfahren, welches das Pressen fester Teile der Weintraube umfasst, und Einleitung des gepressten Produktes in einen Wei,nfermentierer, um eine Kappe auszubilden, die auf dem Most schwimmt,
**dadurch gekennzeichnet, dass** mindestens ein Teil der Kappe mit Mikrowellen bestrahlt wird.

2. Verfahren nach Anspruch 1,
**dadurch gekennzeichnet, dass** die Mikrowellenbestrahlung in einer von dem Most getrennten Umgebung auf den Schalen ausgeführt wird.

3. Verfahren nach Anspruch 2,
**dadurch gekennzeichnet, dass** die Schalen während der Bestrahlung eine Temperatur zwischen 40°C und 60°C erreichen.

4. Verfahren nach Anspruch 2,
**dadurch gekennzeichnet, dass** der Most ohne Vorhandensein von Schalen auf eine Temperatur zwischen 60°C und 80°C erwärmt wird.

5. Verfahren nach den Ansprüchen 3 und 4,
**dadurch gekennzeichnet, dass** der Most und die Schalen miteinander vermischt und für eine Zeitdauer zwischen 0 und 30 Minuten der Mazeration überlassen werden.

6. Verfahren nach Anspruch 5,
**gekennzeichnet durch** Weiterführung in die alkoholische Fermentation nach der Mazeration.

7. Verfahren nach Anspruch 6,
**dadurch gekennzeichnet, dass** die alkoholische Fermentation ohne Vorhandensein von Schalen erfolgt.

8. Verfahren nach Anspruch 1,
**dadurch gekennzeichnet, dass** die Frequenz der Mikrowellen zwischen 900 und 3000 MHz schwankt.

9. Verfahren nach Anspruch 1,
**dadurch gekennzeichnet, dass** die Mikrowellen eine Leistung zwischen 800 Watt und 1200 Watt aufweisen.

10. Verfahren nach Anspruch 1,
**dadurch gekennzeichnet, dass** die Mikrowellenleistung bei jedem Strahlungszyklus mittels eines geeigneten Bedienungsfeldes auf bis zu 100% der Maximalleistung einstellbar ist.

11. Verfahren nach Anspruch 1,
**dadurch gekennzeichnet, dass** die Dauer eines jeden Bestrahlungszyklus zwischen 2 und 3 Minuten beträgt.

12. Verfahren nach Anspruch 1,
**dadurch gekennzeichnet, dass** die Kappe vor jedem Bestrahlungszyklus in den Most gemischt wird.

13. Verfahren nach Anspruch 1,
**dadurch gekennzeichnet, dass** eine Zeitdauer zwischen einem Bestrahlungszyklus und dem nächsten übrigbleibt, die ausreichend ist, damit sich eine auf dem Most schwimmende Kappe ausbilden kann.

14. Verfahren nach Anspruch 1,
**dadurch gekennzeichnet, dass** nach dem ersten Bestrahlungszyklus mindestens ein Bestrahlungszyklus täglich ausgeführt wird.

15. Verfahren nach Anspruch 14,
**dadurch gekennzeichnet, dass** nach dem ersten Bestrahlungszyklus nicht mehr als drei Bestrahlungszyklen täglich ausgeführt werden.

16. Verfahren nach Anspruch 1,
**dadurch gekennzeichnet, dass** die Bestrahlung der Schalen in jeder beliebigen Position des Weinfermentierers erfolgt.

17. Verfahren nach Anspruch 1,
**dadurch gekennzeichnet, dass** die Bestrahlung der Schalen erfolgt, wenn sie von der Flüssigkeit getrennt sind.

18. Weinherstellungsanlage, die einen mit Einrichtungen zum Mischen des gepressten Produktes versehenen Weinfermentierer, Einrichtungen zum Extrahieren der Flüssigkeit und Einrichtungen zum Extrahieren der Schalen aufweist,
**dadurch gekennzeichnet, dass** sie Mikrowellenbestrahlungseinrichtungen aufweist.

19. Anlage nach Anspruch 18,
**dadurch gekennzeichnet, dass** die Mikrowellenbestrahlungseinrichtungen mindestens einen Mikrowellenerzeuger umfassen, und dass in der Weinfermentiererwand mindestens ein Fenster vorhanden ist, welches zu dem Mikrowellendurchgang durchsichtig ist.

20. Anlage nach Anspruch 18,
**dadurch gekennzeichnet, dass** mindestens ein Fenster, durch welches die Strahlung erfolgt, entlang der Weinfermentiererwand in einer Höhe positioniert ist, so dass nur die Schalen beteiligt sind.

21. Anlage nach Anspruch 18,
**dadurch gekennzeichnet, dass** sie mehrere Mikrowellenerzeuger und mehrere Bestrahlungsfenster aufweist.

22. Anlage nach Anspruch 18,
**dadurch gekennzeichnet, dass** der Mikrowellenerzeuger eine Maximalleistung von 2 kW aufweist.

23. Anlage nach Anspruch 18,
**dadurch gekennzeichnet, dass** sie eine Steuerschaltung zur Regulierung der Mikrowellenleistung zwischen 0% und 100% ihres Maximalwertes aufweist.

24. Anlage nach Anspruch 18,
**dadurch gekennzeichnet, dass** das Bestrahlungsfenster eine Oberfläche aufweist, die zwischen 20 und 60 cm² beträgt.

25. Anlage nach Anspruch 18,
**dadurch gekennzeichnet, dass** der Mikrowellenerzeuger mit einer Frequenz zwischen 900 und 3000 MHz strahlt.

## Revendications

1. Procédé comprenant le pressage des parties solides du raisin, et l'introduction du produit pressé dans un appareil de fermentation de vin pour la formation d'une couverture qui flotte sur le moût, **caractérisé en ce qu'**une partie au moins de la couverture est irradiée par des hyperfréquences.

2. Procédé selon la revendication 1, **caractérisé en ce que** l'irradiation par les hyperfréquences est réalisée sur les peaux dans un environnement séparé du moût.

3. Procédé selon la revendication 2, **caractérisé en ce que** les peaux atteignent une température comprise entre 40 °C et 60 °C pendant l'irradiation.

4. Procédé selon la revendication 2, **caractérisé en ce que** le moût est chauffé, en l'absence des peaux, à une température comprise entre 60 °C et 80 °C.

5. Procédé selon les revendications 3 et 4, **caractérisé en ce que** le moût et les peaux sont mélangés et laissés macérer pendant un temps compris entre 0 et 30 min.

6. Procédé selon la revendication 5, **caractérisé par** l'exécution de la fermentation alcoolique après macération.

7. Procédé selon la revendication 6, **caractérisé en ce que** la fermentation alcoolique est réalisée en l'absence des peaux.

8. Procédé selon la revendication 1, **caractérisé en ce que** les microondes ont une fréquence qui varie entre 900 et 3 000 MHz.

9. Procédé selon la revendication 1, **caractérisé en ce que** les microondes ont une puissance comprise entre 800 W et 1 200 W.

10. Procédé selon la revendication 1, **caractérisé en ce que** la puissance des microondes est réglable, à chaque cycle d'irradiation, jusqu'à 100 % de la puissance maximale, à l'aide d'un panneau de commande convenable.

11. Procédé selon la revendication 1, **caractérisé en ce que** la durée de chaque cycle d'irradiation est comprise entre 2 et 3 min.

12. Procédé selon la revendication 1, **caractérisé en ce que** la couverture est mélangée avec le moût avant chaque cycle d'irradiation.

13. Procédé selon la revendication 1, **caractérisé en ce qu'**un temps suffisant pour que la couverture qui flotte sur le moût puisse se former est laissé entre un cycle d'irradiation et le suivant.

14. Procédé selon la revendication 1, **caractérisé en ce que**, après le premier cycle d'irradiation, au moins un cycle d'irradiation est effectué quotidiennement.

15. Procédé selon la revendication 14, **caractérisé en ce que**, après le premier cycle d'irradiation, trois cycles d'irradiation au plus sont exécutés quotidiennement.

16. Procédé selon la revendication 1, **caractérisé en ce que** l'irradiation des peaux s'effectue dans une position quelconque de l'appareil de fermentation de vin.

17. Procédé selon la revendication 1, **caractérisé par** l'irradiation des peaux lorsqu'elles sont séparées du liquide.

18. Installation de fabrication de vin comprenant un appareil de fermentation de vin muni d'un dispositif de mélange du produit pressé, d'un dispositif d'extraction du liquide et d'un dispositif d'extraction des peaux, **caractérisé en ce qu'**il comprend un dispositif d'irradiation par des hyperfréquences.

19. Installation selon la revendication 18, **caractérisée en ce que** le dispositif d'irradiation par des hyperfréquences comprend au moins un générateur d'hyperfréquences et, dans la paroi de l'appareil de fermentation de vin, au moins une fenêtre transparente au passage des hyperfréquences.

20. Installation selon la revendication 18, **caractérisée en ce qu'**une fenêtre au moins par laquelle s'effectue l'irradiation est disposée le long de la paroi de l'appareil de fermentation de vin à une hauteur telle qu'elle implique uniquement les peaux.

21. Installation selon la revendication 18, **caractérisée en ce qu'**elle comprend plusieurs générateurs d'hyperfréquences et plusieurs fenêtres d'irradiation.

22. Installation selon la revendication 18, **caractérisée en ce que** le générateur d'hyperfréquences a une puissance maximale de 2 kW.

23. Installation selon la revendication 18, **caractérisée en ce qu'**elle comprend un circuit de commande destiné à réguler la puissance des hyperfréquences entre 0 % et 100 % de sa valeur maximale.

24. Installation selon la revendication 18, **caractérisée en ce que** la fenêtre d'irradiation présente une surface ayant une dimension comprise entre 20 et 60 cm².

25. Installation selon la revendication 18, **caractérisée en ce que** le générateur d'hyperfréquences irradie à une fréquence comprise entre 900 et 3 000 MHz.
